(19) Europäisches Patentamt
European Patent Office
Office européen des brevets

(11) **EP 2 316 117 B1**

(12) **EUROPÄISCHE PATENTSCHRIFT**

(45) Veröffentlichungstag und Bekanntmachung des Hinweises auf die Patenterteilung:
**12.08.2015 Patentblatt 2015/33**

(21) Anmeldenummer: **08785678.7**

(22) Anmeldetag: **19.08.2008**

(51) Int Cl.:
**G10K 11/168** (2006.01)

(86) Internationale Anmeldenummer:
**PCT/EP2008/006917**

(87) Internationale Veröffentlichungsnummer:
**WO 2010/020268 (25.02.2010 Gazette 2010/08)**

(54) **GERÄUSCHGEMINDERTE VORRICHTUNG UND VERFAHREN ZUR GERÄUSCHVERRINGERUNG**

NOISE-REDUCING DEVICE AND METHOD FOR REDUCING NOISE

DISPOSITIF DE RÉDUCTION DE BRUIT ET PROCÉDÉ POUR RÉDUIRE LES BRUITS

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**04.05.2011 Patentblatt 2011/18**

(73) Patentinhaber: **Siemens Aktiengesellschaft 80333 München (DE)**

(72) Erfinder: **ERTL, Michael 91233 Neunkirchen am Sand (DE)**

(56) Entgegenhaltungen:
**DE-A1- 10 338 307        DE-A1- 19 834 379
DE-B3-102005 045 844    FR-A- 2 630 175
GB-A- 2 172 966          GB-A- 2 443 014
JP-A- 4 362 499**

**Beschreibung**

Die Erfindung betrifft eine Vorrichtung mit mindestens einem zu schalldämpfenden Bereich und ein Verfahren zur Geräuschverringerung. Eine solche Vorrichtung ist aus GB-A-2172966 bekannt.

Flächenhafte Plattenstru-kturen bei mechanischen oder elektrischen Anlagen werden durch direkte oder indirekte vibratorische Anregung (Krafteintrag, Schallleitung) zu Biegeschwingungen angeregt, die insbesondere bei der Anregung von Eigenschwingungen eine erhebliche Oberflächenvibration und damit verbundene unerwünschte Schallabstrahlung aufweisen. Zur Erhöhung der statischen und / oder dynamischen Belastbarkeit sind solche flächigen Plattenstrukturen häufig durch Rippen oder Sicken versteift. Werden diese Versteifungen in Plattenregionen platziert, in denen bei der unversteiften Platte Schwingungsmaxima (Schwingungsbäuche) auftreten, bewirkt die damit verbundene lokale Erhöhung der Biegesteifigkeit eine erhebliche lokale Reduktion der Vibrationsamplitude und Schallabstrahlung sowie ein verändertes Eigenschwingverhalten der gesamten Plattenstruktur. Die Maxima der Biegeauslenkung und der Schallabstrahlung sind in der versteiften Plattenstruktur in den Zentren der einzelnen Teil-Plattenfelder zwischen den Versteifungen lokalisiert.

Eine unversteifte oder versteifte dünnwandige Plattenstruktur stellt ein schwingungsfähiges System dar. Die Trägheitskräfte im Platteninneren führen zu Längs-, Dilatations-, Scher- und Biegewellen. Bei dünnwandigen Plattenstrukturen (bei denen eine Ausdehnung der Platte senkrecht zur Ebene wesentlich kleiner ist als in der Ebene) und/oder bei Vibrationsanregung senkrecht zur Plattenoberfläche treten ausschließlich Biegewellen auf, die für die Schallabstrahlung relevant sind. Kennzeichnend für die Biegeschwingungen der zu dämpfenden Plattenstruktur sind die orts- und zeitabhängige Amplitude (Durchbiegung) sowie die Vibrationsschnelle. Ein die biegeschwingende Platte umgebendes Fluid (Gas oder Flüssigkeit) wird dadurch zu Längsschwingungen angeregt, die im akustischen Frequenzbereich als unerwünschter Schall wahrgenommen werden. Der Schallabstrahlungsgrad ist hauptsächlich abhängig von der Größe der vibrierenden Fläche, der Vibrationsschnelle in Normalenrichtung zur Oberfläche sowie der räumlichen Verteilung der Vibrationsamplituden und der Vibrationsphasenlage.

Eine Verringerung der Geräuschabstrahlung wurde bisher durch passive oder aktive Maßnahmen bewirkt. Als passive Maßnahmen sind bekannt:

(1) Verstimmung der biegeschwingenden Plattenstruktur (z. B. Kesselstruktur) beispielsweise durch eine Anbringung von Zusatzmassen zur Frequenzverschiebung, um die Anregung von Eigenmoden zu vermeiden, oder durch eine Anbringung von Versteifungselementen (Rippen, Sicken, Doppelwandung, Sandwichstrukturen). Diese Maßnahme weist den Nachteil einer starken Zunahme der Gesamtmasse und einer negativen Auswirkungen auf die Ästhetik der Oberfläche auf.

(2) Einhausung der vibrierenden Platten-/Kesselstruktur. Nachteile umfassen hier hohe Kosten und einen hohen Platzbedarf. Oft ist zudem eine schallwirksame komplette Einhausung nicht möglich (Zuleitungen, Zugangsöffnungen). Zudem verhindert ein erforderlicher Abwärmetransport häufig eine vollständige Einhausung.

(3) Anbringung von akustischen Dämmplatten mit hoher akustischer Dämpfung, z. B. durch poröse Absorber, Dämmwolle, Sandwichstrukturen mit stark dämpfenden und schallreflektierenden Lagen. Hier liegt nachteiligerweise eine geringe Schalldämmwirksamkeit in steifigkeits- und massenbestimmten Frequenzbereichen von Plattenschwingungen vor.

(4) Reduzierung der Vibrationsquellstärke oder deren Schalleinleitung durch eine Reduzierung der schwingungsanregenden Kräfte (z. B. bei Transformatoren mittels einer Absenkung der magnetischen Induktion) oder durch Absenkung der Maschinen- oder Übertragungsleistung. Dies ist jedoch eine sehr kostenintensive und den Kundennutzen stark verringernde Lösung.
Als aktive Maßnahmen sind bekannt:

(5) Aktive Vibrations- und Schallauslöschung durch geregelte aktive Krafteinprägung auf die vibrierenden Platten mittels piezoelektrischen, elektromagnetischen oder magnetostriktiven Aktuatoren und

(6) Aktive Schallauslöschung durch Gegenschall.

S. Langer, "Schalltransmission durch Isolierverglasung", Dissertation, Braunschweiger Schriften zur Mechanik Nr.41, Braunschweig, 2001, beschreibt ein FEM/REM-Berechnungsmodell für die Schallwellenausbreitung und den Schalldurchgang durch mehrfach verglaste Fenster sowie dynamische Wechselwirkungsvorgänge. Dabei werden die Fensterscheiben, die aufgrund von Schalldruckänderungen der umgebenden Luft Biegeschwingungen erfahren und als Kirchhoffplatten modelliert werden, ebenso wie der gasgefüllte Scheibenzwischenraum und die abgeschlossenen, luftgefüllten Räume des Gebäudes mit der FEM behandelt. Dabei wird verwendet, dass Schall ein Medium zur Ausbreitung benötigt. Mit abnehmendem Gasdruck im Hohlraum ändert sich die Dichte der Luft. Darauf ist eine Änderung der Schallgeschwindigkeit

$$c = \sqrt{\frac{\kappa p}{\rho}}$$

zu erwarten, wobei p die Gasdichte, p den Gasdruck und κ den Isentropenkoeffizient bezeichnet. Zwar ist der Isentropenkoeffizent eine Funktion von Temperatur und Gasdruck, bei vereinfachender Annahme eines idealen Gases kann die Druckabhängigkeit jedoch vernachlässigt werden. Eine Änderung des Gasdrucks in der Luftfüllung des Hohlraums hat somit nur eine Änderung der Gasdichte zur Folge. Die Schallgeschwindigkeit bleibt bei Annahme einer verlustlosen Schallausbreitung in der Luft unverändert. Der Schalldurchgang wiederum ist vom Verhältnis der akustischen Impedanz der beiden Medien abhängig. Abhängig von den geometrischen Abmaßen, den Materialeigenschaften der Glasplatten sowie der Schalleigenschaft des Gases im unterdruckbeaufschlagten Hohlraums (Kompressionsmodul, Dichte und daraus resultierender Schallgeschwindigkeit) weist das Isolierfenster ein frequenzabhängiges Schalldämmaß auf. Ein typischer Verlauf von Schalldämmkurven für einen Hohlraum mit Luftfüllung unter Normbedingungen als auch mit Unterdruckbedingungen ist prinzipiell gleich, das Niveau der Schalldämmung unterscheidet sich jedoch stark. Insbesondere verringert ein geringerer Druck im Hohlraum die Kopplung zwischen den Glasscheiben. Auch beschrieben ist die Verwendung von Verbundglas, wodurch sich eine weitere Absenkung des Schalldurchganges ausbildet. Insbesondere bewirkt der dämpfende Charakter zusätzlicher Absorbermaterialien einen wesentlich glatteren Frequenzverlauf der Schalldämmkurven, d. h., dass ein starker Dämmeinbruch bei bestimmten Frequenzen vermindert wird. Nach C. Filthaut "Schwingungsdämpfung mittels Verbundblechen aus Stahl und Kunststoff"; Haus der Technik (Veranst.), Essen, 1999, besteht die Dämpfungswirkung solcher Verbundbleche darin, dass der Zwischenschicht bei Biegeschwingungen pulsierende Verformungen aufgezwungen werden, wodurch dort infolge innerer Reibung Schwingungsenergie absorbiert wird.

Nach A. Meier "Die Bedeutung des Verlustfaktors bei der Bestimmung der Schalldämmung im Prüfstand"; Dissertation; Shaker, Aachen 2000 beträgt das Schalldämmaß von Einfachwänden nach dem experimentell bestimmten Bergerschen Massengesetz

$$R(\theta) \;=\; 10\log\left[1+\left(\frac{\omega \cdot m''}{2\rho_0 \cdot c_0}\cos\theta\right)^2\right] \;dB \quad,$$

wobei $m''$ die flächenbezogene Masse der Platte bezeichnet und $\omega = 2nf$ die Kreisfrequenz der im Winkel $\theta$ gegenüber der Plattennormalen einfallenden Schallwelle.

Es ist die Aufgabe der vorliegenden Erfindung, eine kostengünstige und vergleichsweise einfach umsetzbare Möglichkeit zur Verringerung einer Schallabstrahlung, insbesondere durch biegeschwingende Plattenbereiche, bereitzustellen.

Diese Aufgabe wird mittels einer Vorrichtung und eines Verfahrens nach dem jeweiligen unabhängigen Anspruch gelöst. Bevorzugte Ausführungsformen sind insbesondere den abhängigen Ansprüchen entnehmbar.

Die Vorrichtung weist mindestens einen zu dämpfenden Bereich auf, welcher zumindest teilweise von mindestens einem Vakuumpaneel abgedeckt ist. Dabei ist aufgrund der Natur der Abdeckung mittels eines Vakuumpaneels dieses vom zu dämpfenden Bereich beabstandet, so dass sich zwischen dem zu dämpfenden Bereich und dem Vakuumpaneel mindestens ein unterdruckbeaufschlagbarer Hohlraum bildet. Dazu ist der Hohlraum, ggf. über weitere Hohlräume, mit einem Unterdruck- bzw. Vakuummittel, z. B. einer Vakuumpumpe, verbunden, welches den Unterdruck im Regelbetrieb herstellt und hält.

Durch den im Regelbetrieb unterdruckbeaufschlagten Hohlraum wird eine Geräuschabstrahlung mittels einer Verminderung der Schallabstrahlung allein schon aufgrund einer Reduzierung des Schalldurchganges durch den Hohlraum zwischen dem Gehäuse und dem Vakuumpaneel wirksam erreicht. Bei der durch Vakuum reduzierter Dichte im Hohlraum reduziert sich nämlich die akustische Impedanz, und die Schalldurchleitung wird effektiv an den beiden Übergängen Festkörper - Vakuum vermindert. Es ergibt sich eine Reduzierung der Oberflächenvibrationsschnelle und somit des Körperschallmaßes und des Abstrahlgrades der in die Umgebung abstrahlenden Oberfläche des Vakuumpaneels im Vergleich zu einem nicht mit Vakuumpaneelen ausgerüsteten Bereich.

Vorzugsweise ist das mindestens eine Vakuumpaneel an einem vibrationsarmen Bereich der Vorrichtung befestigt, um eine Schwingungsübertragung zwischen der Vorrichtung und dem Vakuumpaneel über den mechanischen Kontakt dazwischen klein zu halten. Unter einem vibrationsarmen Bereich wird ein Bereich verstanden, an dem im Vergleich zu anderen Bereichen nur geringe Vibrationsamplituden (mit nicht mehr als 20%, vorzugsweise nicht mehr als 10 % der Maximalamplitude) vorherrschen, insbesondere lokale Schwingungsminima. Die Anbringung erfolgt vorzugsweise annähernd punkt- und / oder linienförmig.

Ferner wird eine Vorrichtung bevorzugt, an der das mindestens eine Vakuumpaneel im Regelbetrieb durch den Unterdruck in dem Hohlraum an der Vorrichtung befestigt ist. Dadurch wird eine Weiterleitung von Körperschall von der Vorrichtung auf ein Paneel gedämpft, insbesondere im Vergleich zu einer beständig festen körperlichen Verbindung.

Es wird zur ausreichenden Vakuumfestigkeit und zur weiteren Schwingungsentkopplung zwischen Gehäuse und Vakuumpaneel bevorzugt, wenn das Vakuumpaneel über eine elastische Kunststoffdichtung auf dem Gehäuse aufliegt. Es wird besonders bevorzugt, wenn die Kunststoffdichtung im Form eines O-Rings vorliegt, insbesondere eines Dichtkanten-O-Rings. Zur Erhöhung der Vakuumfestigkeit wird eine silikongedichtete Kunststoffdichtung bevorzugt.

Es wird auch eine Vorrichtung bevorzugt, bei der die von dem mindestens einen Vakuumpaneel abgedeckten bzw. vom Hohlraum begrenzten Bereiche zumindest teilweise platten- und / oder schalenähnlich aufgebaut und vorzugsweise nicht durch Versteifungselemente versteift sind. Die zu dämpfenden Bereiche können allgemein Versteifungselemente (Rippen, Sicken usw.) aufweisen oder darauf verzichten. In anderen Worten kann das Vakuumpaneel auch Versteifungselemente überdecken bzw. werden diese von einem Hohlraum begrenzt.

Es wird ferner bevorzugt, wenn der zu dämpfende Bereich eine Wand, insbesondere Außenwand, der Vorrichtung aufweist.

Das mindestens eine Vakuumpaneel ist dann vorzugsweise zumindest teilweise nahe an mindestens einem Versteifungselement angebracht, insbesondere einem Versteifungselement, das an den zu dämpfenden Bereich angrenzt. Da zur Erreichung einer ausreichenden Steifigkeit der Vorrichtung sowieso häufig Versteifungselemente vorgesehen sind (z. B. eine Rippe oder eine Sicke), in deren Umfeld geringere Schwingungsamplituden auftreten, ist eine Anbringung von Vakuumpaneelen dort aufgrund des nur geringen konstruktiven Mehraufwands vorteilhaft. Im Folgenden wird, falls nicht ausdrücklich anders ausgesagt, die Vorrichtung anhand von abgedeckten plattenförmigen Wandbereichen beschrieben, worunter sowohl ebene als auch gekrümmte dünne Bereiche (Schalenbereiche) zu lesen sind.

Um ein Abfallen der Vakuumpaneele bei Verlust des Unterdrucks zu vermeiden, wird eine Vorrichtung bevorzugt, die ferner mindestens eine Unterdruckabfallsicherung zur mechanischen Fixierung mindestens eines der Vakuumpaneele bei einem fehlenden Unterdruck zwischen dem mindestens einen der Vakuumpaneele und der Vorrichtung aufweist. Dies kann beispielsweise ein einfacher Vorsprung sein, welcher an der der Vorrichtung entgegengesetzten Seite über das Vakuumpaneel reicht. Um zum Beginn des Regelbetriebs die Vakuumpaneele nicht an die Vorrichtung drücken zu müssen, wird es bevorzugt, wenn durch die Unterdruckabfallsicherung(en) das Vakuumpaneel so an der Vorrichtung gehalten wird, dass ein zum Ansaugen des Vakuumpaneels ausreichend dichter Hohlraum gebildet wird.

Zur weiteren Geräuschdämmung wird es bevorzugt, wenn zumindest ein Hohlraum zwischen der Vorrichtung und dem mindestens einen Vakuumpaneel zumindest teilweise mit mindestens einem schallabsorbierenden Material gefüllt ist, z. B. Dämmwolle und / oder porösen Absorbern.

Zur noch weiteren Geräuschdämmung wird es bevorzugt, wenn das Vakuumpaneel mehrlagig ausgeführt ist (Verbundpaneel).

So mag es bevorzugt sein, wenn das Vakuumpaneel lediglich zweilagig ausgestaltet ist, wobei eine Paneellage als Absorberschicht, insbesondere dämpfende Kunststoffschicht, ausgestaltet ist. Die andere Paneellage ("Trägerlage") kann insbesondere die mechanischen Eigenschaften (Schwingungscharakteristik, Festigkeit usw.) bestimmen und ist vorteilhafterweise auf Metall (Stahl, Aluminium, Legierungen davon usw.), Kunststoff, Keramik oder einem Verbund davon aufgebaut.

Das Vakuumpaneel kann aber auch eine Trägerlage aufweisen, auf der beidseitig jeweils eine Absorberschicht, insbesondere dämpfende Kunststoffschicht, aufgebracht ist, was ein dreischichtiges Verbundblech ergibt.

Ferner kann es bevorzugt sein, wenn das Vakuumpaneel mindestens zwei - insbesondere metallische - Trägerlagen mit dazwischen eingebrachter Absorberlage, insbesondere Kunststoffschicht, speziell viskoelastischer Kunststoffschicht, aufweist.

Durch die Verwendung einer Schallabsorberlage ergibt sich eine weitere Absenkung des Schalldurchgangs. Insbesondere bewirkt der dämpfende Charakter zusätzlicher Absorbermaterialien einen wesentlich glatteren Frequenzverlauf der Schalldämmkurven, d. h., dass ein Dämmeinbruch bei bestimmten Frequenzen vermindert werden kann.

Alternativ oder zusätzlich kann es kann es aber auch bevorzugt sein, wenn zwischen mindestens zwei Lagen des Vakuumpaneels zumindest im Regelbetrieb ein unterdruckbeaufschlagbarer Hohlraum vorhanden ist.

Diese Verbundanordnungen können allgemein auf mehr als drei Lagen verallgemeinert werden.

Es können an der Vorrichtung, insbesondere Wandung der Vorrichtung, Vakuumpaneele außenseitig, innenseitig oder beidseitig (innen- und außenseitig) angeordnet sein.

Das Vakuumpaneel (inklusive der schwingungsfähigen Befestigung und Vakuumabdichtung) ist vorzugsweise so dimensioniert, dass es im zu dämpfenden Frequenzbereich keine dominanten Eigenmoden bzw. Resonanzfrequenzen ausbildet.

Es wird auch bevorzugt, wenn die Dicke des Vakuumpaneels (Schallisolationspaneels) und dessen Abstand zum zu dämpfenden Bereich so ausgelegt sind, dass eine Durchbiegung des Vakuumpaneels vermieden wird, die zum Kontakt mit dem zu dämpfenden Bereich führt.

Es wird zur Schalldämpfung außerdem bevorzugt, wenn die Masse der Vakuumpaneele sehr viel kleiner ist als die Masse des flächenmäßig zugehörigen zu bedämpfenden Bereichs, insbesondere Wandbereichs, speziell plattenartigen Bereichs.

Die Vorrichtung ist vorzugsweise als Gehäuse ausgebildet.

Das Gehäuse ist vorzugsweise zur Aufnahme eines elektrischen oder mechanischen Geräts ausgestaltet, insbesondere zur Aufnahme eines Transformators, speziell Öltransformators, oder eines Motors, z. B. Stromgenerators.

Bei dem Verfahren zur Geräuschverringerung wird ein Vakuumpaneel durch Unterdruck so an eine Vorrichtung angesaugt, dass zwischen Vakuumpaneel und zu dämpfendem Bereich ein unterdruckbeaufschlagter Hohlraum gebildet wird.

Unter Berücksichtigung der Anregungs- und Abstrahlungsmechanismen ist insbesondere durch eine Unterteilung einer versteiften Plattenkonstruktion in kraftführende Versteifungen (Rippen / Stege, Sicken usw.) und schalltechnisch entkoppelte Verkleidungspaneele eine erhebliche Geräuschminderung zu erzielen.

In den folgenden Figuren wird die Erfindung anhand von Ausführungsbeispielen schematisch genauer beschrieben, bei denen lediglich anschauungshalber die Vorrichtung als ein Gehäuse ausgestaltet ist. Dabei können zur besseren Übersichtlichkeit gleiche oder gleichwirkende Elemente mit gleichen Bezugszeichen versehen sein.

FIG 1A     zeigt in Schrägansicht ein Gehäuse mit einer beispielhaften herausgesuchten Verteilung einer Vibrationsamplitude;

FIG 1B     zeigt in zwei Teilbildern weitere mögliche resonante Vibrationsamplitudenverteilungen des herausgesuchten Gehäuseabschnitts aus FIG 1A;

FIG 2     zeigt als Schnittdarstellung in Seitenansicht einen Ausschnitt aus dem Gehäuse aus FIG 1A mit daran befestigten Vakuumpaneelen;

FIG 3     zeigt als Draufsicht den Ausschnitt aus FIG 2;

FIG 4     zeigt in zwei Teilbildern FIG 4A und FIG 4B jeweils als Schnittdarstellung in Seitenansicht einen vergrößerten Ausschnitt der Anordnung aus FIG 2 an einem Randbereich eines Vakuumpaneels mit unterschiedlicher Ausgestaltungen einer Unterdruckverlusthalterung;

FIG 5     zeigt in zwei Teilbildern FIG 5A und FIG 5B jeweils als Schnittdarstellung in Seitenansicht einen vergrößerten Ausschnitt der Anordnung aus FIG 2 an einem Randbereich eines Vakuumpaneels mit unterschiedlicher Ausgestaltungen des Vakuumpaneels;

FIG 6     zeigt als Schnittdarstellung in Seitenansicht eine weitere mögliche Ausgestaltung des Vakuumpaneels.

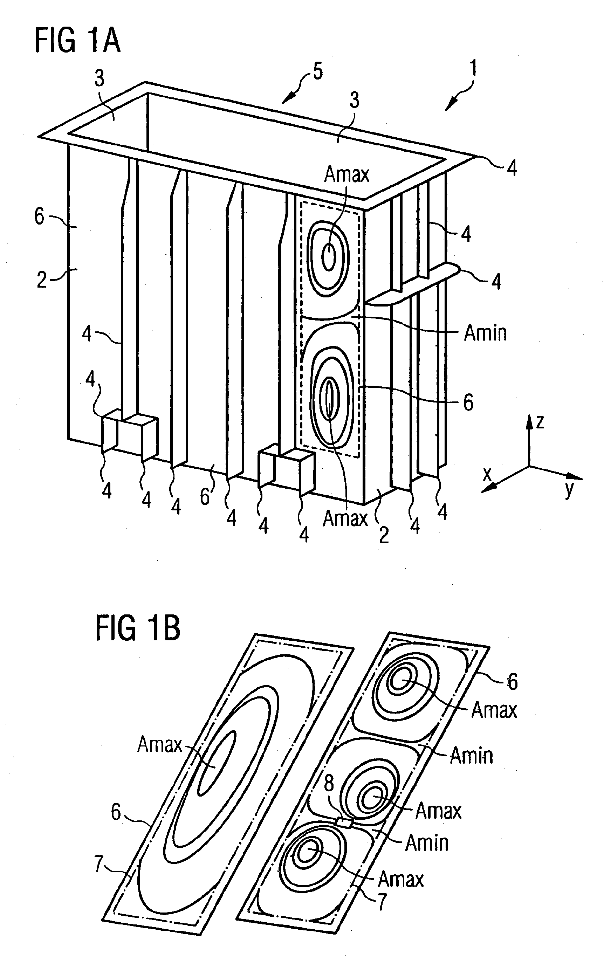

FIG 1A zeigt dazu ein oben offenes Gehäuse 1 zur Aufnahme eines hier nicht dargestellten Öltransformators und der zugehörigen Ölfüllung. Dazu weist das offene Gehäuse 1 fünf gerade Wände auf, von denen hier zwei Seitenwände 2 von außen sichtbar sind und zwei weitere Seitenwände 3 von innen sichtbar sind. Die Wände 2,3 weisen jeweils eine plattenförmige Grundform auf, d. h., dass sie eine im Vergleich zu ihrer ebenen Ausdehnung geringe Dicke aufweisen. An den Außenseiten der Wände 2, 3 sind zur deren Stabilisierung nach außen gerichtete Versteifungsrippen 4 angebracht. Die Wände 2,3 können also auch jeweils als eine biegeschwingende, rippenversteifte Platte angesehen werden. Bei eingesetztem Transformator wird die offene Oberseite 5 mit einem Deckel (nicht gezeigt) geschlossen, welcher ebenfalls Versteifungsrippen aufweisen kann. Durch die Versteifungsrippen 4 wird die jeweilige Seitenwand 2, 3 mechanisch verstärkt und reagiert dadurch in der Nähe der Rippen 4 vibrationsärmer auf eine Schwingungsanregung durch den Transformator. Mit anderen Worten stellt der Bereich 6 an den und nahe um die Versteifungsrippen 4 herum einen vibrationsarmen Bereich des Gehäuses 1 bereit. Vergleichsweise hohe Vibrationsamplituden werden sich somit in nicht versteiften plattenförmigen (Teil-)Bereichen 6 neben den Versteifungsrippen 4 ausbilden. Dabei braucht diese vibrationsanfälligeren Bereiche 6 nicht vollflächig eine höhere Vibrations- bzw. Schwingungsamplitude aufzuweisen als der vibrationsarme Bereich an oder in der Nähe der Versteifungsrippen 4; vielmehr können sich auch im nicht verseiften Bereich 6 je nach Art der Anregung stationäre Schwingungsknoten ergeben, die einen schwingungsarmen Bereich auch in einiger Entfernung von den Versteifungsrippen 4 bedingen. Auch Kanten usw. können schwingungsarme Bereiche bedingen.

Ferner ist ein beispielhaft herausgegriffener, gestrichelt eingezeichneter nicht-versteifter Bereich 6 einer Seitenwand 2 des Gehäuses 1 gezeigt, welcher teilweise von Versteifungsrippen 4 umgeben ist und selbst keine solchen Versteifungsrippen aufweist. In diesem gestrichelt eingezeichneten Bereich 6 ist hier rein beispielhaft anhand von Höhenlinien die Stärke einer Schwingungsamplitude unter einer für einen Transformator typischen Anregung gezeigt. In dem gestrichelten Bereich 6 treten zwei lokale Schwingungsamplitudenmaxima Amax auf, welche nicht die gleiche Stärke aufzuweisen brauchen. Zwischen ihnen sinkt die Schwingungsamplitude ab und erreicht ungefähr in der Mitte zwischen den beiden Amplitudenmaxima Amax einen vibrationsarmen Bereich eines relativen Amplitudenminimums Amin.

FIG 1B zeigt beispielhaft den in FIG 1A gestrichelt eingezeichneten Bereich 6 mit zwei weiteren möglichen Schwingungsamplitudenverteilungen, welche jeweils durch unterschiedliche Anregungen erzeugt werden. Im linken Teilbild wird in dem gezeigten Bereich 6 der Seitenwand 2 lediglich ein Vibrationsamplitudenmaximum Amax ausgebildet, wobei sich das Vibrationsmuster in Form eines einzigen Schwingungsbauchs über diesen Bereich verteilt.

Es sind, wie im rechten Teilbild gezeigt, aber auch Anregungsbedingungen möglich, bei denen sich über den betrachteten Bereich mehrere, hier: drei, Schwingungsmaxima Amax bilden können, so dass sich ähnlich zu dem in FIG 1A gezeigten Beispiel zwischen ihnen vergleichsweise vibrationsarme Bereiche mit lokalen Schwingungsminima Amin auch ohne Vorsehen von Versteifungsrippen oder anderen Versteifungselementen wie Sicken usw. bilden können.

Durch die Schwingung der Gehäuse wände wird Schall in die Umgebung abgestrahlt, welcher als sehr störend empfunden wird. Diese Schallabstrahlung kann durch ein Aufbringen von Vakuumpaneelen auf das Gehäuse bzw. auf dessen Wände verringert werden, wie weiter unten genauer beschrieben wird. Um eine hohe Schalldämpfung zu erreichen, sollte verhindert werden, dass die Vakuumpaneele selbst zu Schwingungen angeregt werden. Der Aufsatz eines oder mehrerer Vakuumpaneele in dem in FIG 1A gestrichelt eingezeichneten und ferner in FIG 1B gezeigten Bereich 6 sollte an einem vibrationsarmen Bereich geschehen. In jedem der in den Figuren 1A und 1B gezeigten Fälle kann ein Vakuumpaneel dazu insbesondere am äußeren Rand des Bereichs 6 aufgesetzt werden, wie durch eine gestrichelt eingezeichnete Aufsatzlinie 7 angedeutet. Ein Vakuumpaneel überdeckt dann, je nach Anregung, ein oder mehrere stark vibrierende (jeweils ein lokales Vibrationsmaximum aufweisende) Teilbereiche. In den in Figur 1A und Figur 1B, rechtes Teilbild, gezeigten Fällen kann eine Befestigung bzw. Abstützung (Lagerstelle) 8 des Vakuumpaneels auch in einem vibrationsarmen (jeweils ein lokales Vibrationsminimum aufweisenden) Teilbereich realisiert werden. Alternativ kann das Vakuumpaneel aber auch zumindest teilweise an einem Versteifungselement abgestützt sein.

Die Abstützung eines Vakuumpaneels 11 erfolgt vorzugsweise allgemein durch einen peripher umlaufenden Dicht-O-Ring an vibrationsreduzierten Gehäuseplattenbereichen, z. B. neben rippen- oder sickenversteiften Regionen oder im Bereich der Knotenlinien dominanter Eigenschwingungsmoden der Gehäuseplattenbereiche zwischen der Versteifungsstrukturen. Hier können zusätzlich erforderliche punkt- oder linienförmige Lagerstellen positioniert sein.

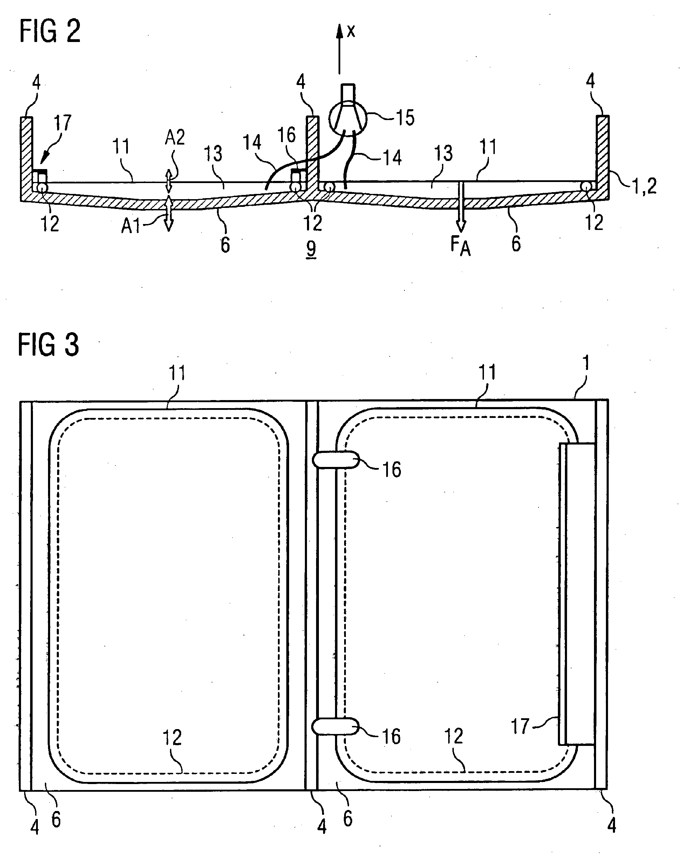

FIG 2 zeigt einen Ausschnitt aus der Seitenwand 2 des Gehäuses 1 von FIG 1A in vertikaler Richtung (entlang der z-Achse), welcher seitlich von zwei Versteifungsrippen 4 begrenzt ist, zwischen denen mittig eine weitere Versteifungsrippe 4 vorhanden ist. Die Seitenwand 2 ist zwischen den Versteifungsrippen 4 zur Lastaufnahme höherer Drücke im Innenraum 9 des Gehäuses 1 leicht nach innen (entgegen der x-Achse) gebogen. Beim Betrieb eines im Gehäuse 1 aufgenommenen Transformators, insbesondere Öltransformators, bei welchem der Innenraum mit Öl gefüllt ist, vibriert die Seitenwand 2 aufgrund eines durch das Öl weitergeleiteten Transformatorbrummens. Wie in FIG 1A und FIG 1B angedeutet, ist die Wand 2 an den oder in der Nähe der Versteifungsrippen 4 vergleichsweise vibrationsarm; starke Vibrationen treten vielmehr in den von den Versteifungsrippen 4 begrenzten plattenähnlichen Wandbereichen 6 auf, wie beispielhaft durch den mit A1 bezeichneten Doppelpfeil angedeutet. Die für eine Schallerzeugung bestimmenden Schwingungen liegen senkrecht zur Oberfläche des plattenähnlichen Wandbereichs 6 bzw. ungefähr parallel zu dessen Flächennormalen. Jeder der zwei gezeigten nicht mit Versteifungselementen versehenen plattenähnlichen Bereiche 6 ist jeweils mittels eines plattenförmigen Vakuumpaneels 11 abgedeckt.

Das plattenförmige Vakuumpaneel 11 stellt selbst ein schwingungsfähiges System dar, dessen Eigenfrequenzen durch seine Geometrie (Dicke, Länge, Breite), physikalischen Eigenschaften (E-Modul, Dichte), die Einspannsituation sowie bei einseitiger Druckbelastung durch die resultierenden Kräfte-Randbedingungen festgelegt sind. Die Schwingungseigenschaften des Vakuumpaneels 11 können z. B. mit der Kirchhoffschen Plattentheorie oder der Biegewellengleichung nach Timoshenko-Mindlin bestimmt werden. Das Vakuumpaneel 11 ist so dimensioniert, dass im zu bedämpfenden Frequenzbereich keine dominanten Eigenmoden bzw. Resonanzfrequenzen liegen. Ferner ist die Dicke des Vakuumpaneels 11 so gewählt, dass in Abhängigkeit von den Feldabmessungen und der Biegesteifigkeit durch den Differenzdruck (Umgebungsdruck - Unterdruck im Hohlraum 13) eine Durchbiegung des Vakuumpaneel 11 vermieden wird, die zu einem Kontakt zu der darunterliegenden Plattenstruktur 6 führt.

Auch ist die Masse der Vakuumpaneele 11 zur Schallentkopplung sehr viel kleiner als die Masse der flächengleichen zu dämpfenden Plattenstrukturen 2,6.

Das jeweilige Vakuumpaneel 11 liegt über eine unterdruckdichte Randabdichtung 12 auf dem zwischen den Versteifungsrippen 4 befindlichen Bereich 6 auf und bedeckt diesen bis auf einen geringen Spalt zur jeweiligen Versteifungsrippe 4 hin. Die Randabdichtung 12 dient zugleich als Abstandshalter zwischen Platte 6 und Isolationspaneel 11.

Durch das Vakuumpaneel 11, die Gehäusewand 2 und die umlaufende randseitige Dichtung 12 wird ein Hohlraum bzw. Zwischenraum 13 zwischen dem Vakuumpaneel 11 und der Gehäusewand 2 geschaffen, welcher über eine jeweilige Vakuumleitung 14 mit einer möglichst geräuscharmen Vakuumpumpe 15 verbunden ist. Die Vakuumpumpe 15 ist grundsätzlich seriell oder parallel an die unterdruckbeaufschlagten Hohlräume 13 angeschlossen. Im stationären Betrieb muss die Vakuumpumpe 15 lediglich Leckratenverluste kompensieren; die Auslegung der Vakuumpumpe 15 kann entsprechend gering dimensioniert erfolgen. Auch ist kein kontinuierlicher Betrieb der Vakuumpumpe 15 erforderlich, wenn durch eine Druckregelung ein ausreichender Unterdruck innerhalb eines Druckregelbereiches sichergestellt wird.

Beim Betrieb der Vakuumpumpe 15 wird durch den im Hohlraum 13 entstehenden Unterdruck das Vakuumpaneel 11 mit einer Kraft $F_A$ an die Gehäusewand 2 bzw. den plattenförmigen Bereich 6 angesaugt bzw. gezogen, wie durch den Pfeil angedeutet. Der Unterdruck wird hierbei vorzugsweise so dimensioniert, dass die Andrückkraft $F_A$ je nach horizontaler oder vertikaler Lage der Vakuumpaneele 11 diese gegen alle statischen (z. B. Schwerkraft) und dynamischen Kräfte (unter allen Betriebsbedingungen) sicher in der zuvor positionierten Lage hält. Der sich so im Hohlraum 13 einstellende Unterdruck sorgt somit einerseits für einen sicheren Sitz des Vakuumpaneels 11 an der Gehäusewand 2, 6 und bewirkt andererseits eine Geräuschminderung aufgrund der geringeren Schwingungsanregung des Vakuumpaneels 11 aufgrund einer Schallübertragung vom plattenähnlichen Bereich 6 durch den Hohlraum 13 hindurch. In anderen Worten verringert der geringere Druck im Hohlraum 13 die Kopplung zwischen der vibrierenden Platte 6 und dem Vakuumpaneel 11 und verbessert die Schalldämmwirkung.

Die Schwingungsdämpfung wird noch effektiver dadurch, dass eine Schwingungsanregung des Vakuumpaneels 11 aufgrund eines über die Befestigung 16 mit dem Gehäuse 2, 6 übertragenen Körperschalls gering ist, da die Vakuumdichtung 12 vergleichsweise weich ist und ferner die Befestigung des Vakuumpaneels 11 nicht permanent ist. Vielmehr wird bei einer Verringerung oder Ausfall des Unterdrucks sich des Vakuumpaneel 11 ohne weitere Maßnahmen vom Gehäuse 2, 6 lösen.

Um zu verhindern, dass bei einem gewollten oder ungewollten Verlust des Unterdrucks die Vakuumpaneele 11 vom Gehäuse 2, 6 abfallen, sind hier beispielsweise eine punktförmige Unterdruckverlusthalterung 16 und eine linienförmige Unterdruckverlusthalterung 17 gezeigt, welche die Vakuumpaneele 11 beim Verlust des Unterdrucks auffangen. Hierbei wird konstruktiv durch die Position und Geometrie der Halterungen sichergestellt werden, dass über die Halterungen im Regelbetrieb bei anliegendem Vakuum kein nennenswerter Vibrationsübertrag auf die Paneele erfolgt. Bei Druckverlust verbleibt eine Restschalldämmwirkung durch Schallabsorptionseigenschaften der Paneele und der Hohlraumanordnung an sich.

Damit bei einer erneuten Erzeugung eines Unterdrucks im Hohlraum 13 die Vakuumpaneele 11 nicht einzeln wieder an das Gehäuse angepresst zu werden brauchen, sondern selbsttätig wieder an das Gehäuse 2 herangezogen werden, ist die Unterdruckverlusthalterung 16,17 zudem so eingerichtet und angeordnet, dass sie das Vakuumpaneel 11 leicht auf das Gehäuse 1,6 presst, wodurch die Dichtung 12 ausreichend dicht gehalten wird.

Der unterdruckbeaufschlagte Hohlraum 13 kann zusätzlich mit schallabsorbierenden Materialien bestückt sein (nicht gezeigt), z. B. mit Dämmwolle und / oder porösen Absorbern.

In einer alternativen Ausgestaltung können beispielsweise verschiedene Hohlräume 13 miteinander fluidisch verbunden sein, so dass nicht jeder Hohlraum 13 eine eigene Verbindung 14 zu einer Vakuumpumpe 15 aufzuweisen braucht.

Insgesamt ergibt sich an einem Vakuumpaneel 11 eine weit geringere Vibration als an dem darunterliegenden zu dämpfenden Bereich, wie durch den kleineren Doppelpfeil A2 angedeutet.

FIG 3 zeigt in Aufsicht zwei von einem jeweiligen Vakuumpaneel 11 bzw. Hohlraum 13 abgedeckte Gehäusebereiche 6, die seitlich von geraden Rippen 4 begrenzt werden. Die Vakuumpaneele 11 weisen in Aufsicht eine rechteckige Grundform mit abgerundeten Kanten auf. Die in Form eines Dichtkanten-O-Rings vorliegende Unterdruckabdichtung 12, deren Lage hier gestrichelt eingezeichnet ist, liegt in Randnähe und folgt umlaufend der Form des Rands des Vakuumpaneels 11. Für das rechte Vakuumpaneel 11 sind beispielhaft zwei Arten von Unterdruckverlusthalterungen gezeigt, nämlich die bereits in FIG 2 beschriebene "punktförmige" Unterdruckverlusthalterung 16 und die "linienförmige" Unterdruckverlusthalterung 17.

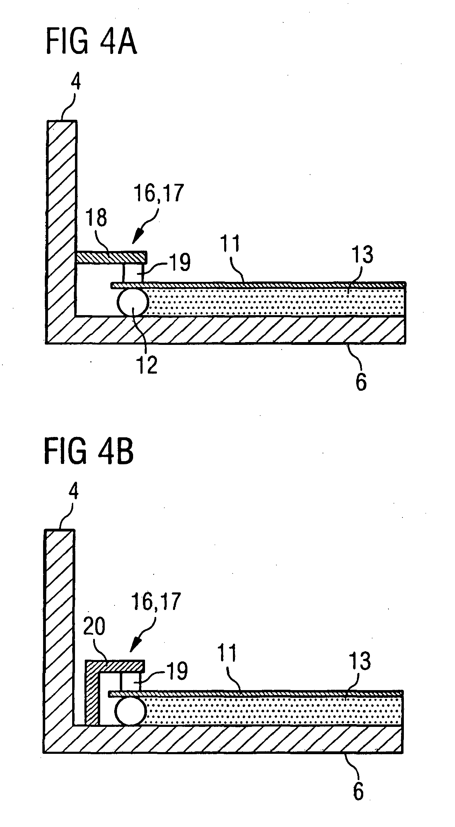

Figur 4A zeigt die Unterdruckverlusthalterung 16 oder 17 in einer Abbildung ähnlich zu Figur 2 im Bereich der Versteifungsrippe 4. Die Unterdruckverlusthalterung 16, 17 weist in einer Ausgestaltung einen von der Versteifungsrippe 4 seitlich abgehenden und über das Vakuumpaneel 11 laufenden Vorsprung 18 aus Metall auf. Am Metall befestigt und in Richtung des Vakuumpaneels 11 gerichtet und dieses gegen den O-Ring 12 drückend befindet sich ein elastisches Kunststoffelement ("Stopper") 19.

In der in Figur 4B gezeigten Variante geht die Unterdruckverlusthalterung 16, 17 nicht mehr von der Versteifungsrippe 4 ab, sondern von dem plattenförmigen Wandbereich 6, welcher von der Versteifungsrippe 4 begrenzt wird. Die Unterdruckverlusthalterung 16, 17 weist somit ein metallisches Halterungsteil 20 auf, welches von dem Bereich 6 ausgehend zwischen dem Vakuumpaneel 11 und der Versteifungsrippe 4 vor das Vakuumpaneel 11 hochläuft und danach so gekrümmt ist, dass es von außen seitlich über das Vakuumpaneel 11 reicht. Auch hier ist am metallischen Halterungsteil 20 der Kunststoffstopper 19 vorhanden. Bei Verlust des Unterdrucks drückt das Vakuumpaneel 11 stärker gegen den Stopper und vergrößert so den Abstand zu Plattenbereich 6. Jedoch hebt das Vakuumpaneel 11 nicht von der Dichtung 12 ab, sondern entspannt diese nur, so dass sich im Folgenden erneut ein Unterdruck aufbauen kann, der das Vakuumpaneel 11 selbsttätig gegen den Plattenbereich 6 zieht.

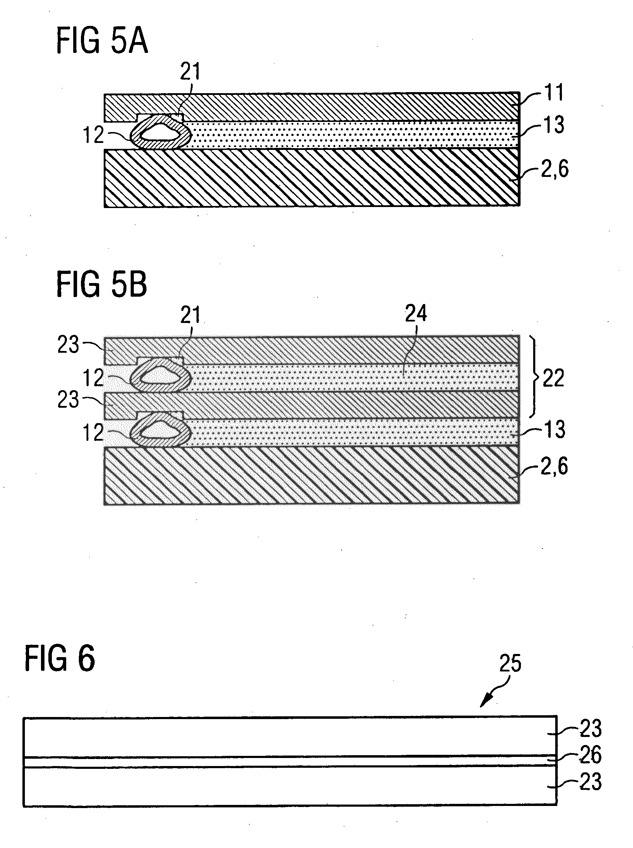

Figur 5A zeigt die Anordnung von Wandbereich 6, Dichtung 12, Vakuumpaneel 11 und Hohlraum 13 an einem Randbereich des Vakuumpaneels 11 in einer weiteren Detaillierung, wobei der unterdrucksichere Dichtring 12 als schlauchartige Dichtung ausgeführt ist. Zur räumlichen Fixierung der Dichtung 12 weist das Vakuumpaneel 11 an seiner zum Gehäuse 2 gerichteten Seite eine Aufnahmenut 21 zur teilweisen Aufnahme der Dichtung 12 auf. In einer alternativen Ausgestaltung kann die Aufnahme 21 auch im Gehäuse 2 vorhanden sein, oder sowohl im Gehäuse 2 als auch im Vakuumpaneel 11.

Figur 5B zeigt eine weitere Ausführungsform des Vakuumpaneels 22, welches nun mehrlagig (als Sandwich-Struktur) mit mehreren abhängigen oder voneinander isolierten Vakuumkammer 24 ausgeführt ist.

Dabei sind nun im einzelnen zwei voneinander beabstandete Paneellagen (Trägerlagen) 23 durch einen unterdruckbeaufschlagten Hohlraum 24 voneinander getrennt, wobei der Hohlraum 24 umseitig von einer weiteren Vakuumdichtung 12 abgedichtet wird. Dabei kann der Unterdruck im Hohlraum 24 des Vakuumpaneels 22 durch eine eigene Fluidleitung zu einer Vakuumpumpe hergestellt werden, oder beispielsweise dadurch, dass das der Hohlraum 24 fluidisch mit dem unterdruckbeaufschlagbaren Hohlraum 13 zwischen Unterdruckpaneel 22 und Gehäuse 2 verbunden ist, beispielsweise mittels einer oder mehrerer Durchführungen. Diese Ausführungsform kann auch als "Doppelvakuumpaneel" bezeichnet werden, da es sich grundsätzlich auch als eine Anordnung von zwei aufeinander gestapelten Vakuumpaneelen bzw. Paneellage 23 beschreiben lässt. Selbstverständlich kann sich die Art und Form der Paneele 23 von der Art und Form der Paneele 11 aus den Figuren 1 bis 5A unterscheiden. Auch ist es möglich, mehr als zwei Paneellagen bzw. Paneele übereinander anzuordnen, um so zu einem n-lagigen Vakuumpaneel mit verbesserter Geräuschdämmung zu gelangen, wobei n ≥ 3 ist.

Wird für die Vakuumpaneele bzw. Paneellagen Stahl- oder Aluminiumblech verwendet, zeigen diese Materialien keine nennenswerte innere Dämpfung; Körperschall kann sich in der Platte nahezu ungehindert ausbreiten und großflächig als Luftschall abgestrahlt werden. Um die Dämpfung der Paneele zu erhöhen, kann beispielsweise mindestens einseitig mindestens eine dämpfende Schallabsorberschicht, z. B. ein Kunststoffbelag, auf das Paneel aufgebracht werden (zweischichtiges Verbundblech) oder eine Absorberschicht, insbesondere dämpfende Kunststoffschicht, zwischen zwei Deckblechen eingebracht werden (dreischichtiges Verbundblech). Die Dämpfungswirkung solcher und ähnlicher Verbundbleche besteht darin, dass der dämpfenden Kunststoffschicht bei Biegeschwingungen des Bleches pulsierende Verformungen aufgezwungen werden, wodurch dort infolge innerer Reibung Schwingungsenergie absorbiert wird.

Figur 6 zeigt dazu eine mögliche weitere Ausführungsform eines Vakuumpaneels 25 in dreilagiger Ausführung, wobei nun zwischen zwei metallischen Trägerlagen 23 des Vakuumpaneels 25 kein Hohlraum vorhanden ist, sondern eine schallabsorbierende Zwischenschicht 26. Zur besonders effektiven Dissipation von Vibrationsenergie in Wärme weist die Zwischenschicht 26 einen viskoelastischen Kunststoff auf. In dem hier gezeigten Ausführungsbeispiel beträgt die Dicke der Kunststoffzwischenschicht 26 zwischen 25 μm und 50 μm.

Grundsätzlich können noch mehr abwechselnde Zwischenschichten 26 und Deckschichten 23 vorhanden sein, zum Beispiel zwei viskoelastische Zwischenschichten 26, welche zwischen drei metallischen Paneellagen 23 eingesetzt sind, oder noch allgemeiner n schallabsorbierende Zwischenschichten 26, insbesondere viskoelastische Zwischenschichten, welche zwischen n+1 metallischen Paneellagen (Trägerlagen) 23 eingebracht sind, oder auch abwechselnd n Absorberlagen und n Trägerlagen, oder auch n Trägerlagen, welche zwischen n+1 schallabsorbierenden Zwischenschichten 26 eingebracht sind.

Statt metallischer Trägerlagen können auch Trägerlagen mit oder aus Kunststoff und / oder Keramik verwendet werden.

Diese Vakuumpaneele 25 können statt der Vakuumpaneele 22 aus Figur 5B verwendet werden, oder auch anstelle nur einer Paneellage 23 aus Figur 5B.

Selbstverständlich ist die vorliegende Erfindung nicht auf die gezeigten Ausführungsbeispiele beschränkt.

So kann die zu bedämpfende Plattenstruktur allgemein einseitig mit einem dichten Fluid behaftet sein (z. B. mit Öl im Fall eines Gehäuses für einen Öltransformator oder Wasser bei einer Tankstruktur), oder auch nicht.

Die Vakuumpaneele können auf der Vorder- und / oder der Rückseite einer zu dämpfenden Plattenstruktur angeordnet sein.

Die Vakuumpaneele können nachträglich an bereits bestehende versteifte Plattenstrukturen angebracht werden.

Die Vorrichtung ist nicht auf ein Transformatorgehäuse beschränkt, sondern kann beispielsweise auch als Gehäuse für Motoren usw. ausgestaltet sein.

Bezugszeichenliste

| 1 | Gehäuse |
|---|---|
| 2 | Seitenwand |
| 3 | Seitenwand |
| 4 | Versteifungsrippe |
| 5 | offene Oberseite |
| 6 | vibrationsanfälliger Wandbereich |
| 7 | Aufsatzlinie |
| 8 | Abstützung |
| 9 | |
| 10 | |
| 11 | Vakuumpaneel |
| 12 | Randabdichtung |
| 13 | Hohlraum |
| 14 | Vakuumleitung |
| 15 | Vakuumpumpe |
| 16 | Unterdruckverlusthalterung |
| 17 | Unterdruckverlusthalterung |
| 18 | Vorsprung |
| 19 | Stopper |
| 20 | Halterungsteil |
| 21 | Aufnahme |
| 22 | Vakuumpaneel |
| 23 | Paneellage |
| 24 | Hohlraum |
| 25 | Vakuumpaneel |
| 26 | verformbare Zwischenschicht |

Amax    Vibrationsamplitudenmaximum

Amin    Vibrationsamplitudenminimum

$F_A$     Andrückkraft

**Patentansprüche**

1.  Vorrichtung (1) mit mindestens einem geräuschzudämpfenden Bereich (6), welcher zumindest teilweise von mindestens einem Vakuumpaneel (11;22;25) abgedeckt ist, **dadurch gekennzeichnet, daß** das mindestens eine Vakuumpaneel (11;22;25) an einem vibrationsarmen Bereich (7) der Vorrichtung (1) befestigt ist.

2.  Vorrichtung (1) nach Anspruch 1, bei der das mindestens eine Vakuumpaneel (11;22;25) mittels mindestens eines unterdruckbeaufschlagten Hohlraums (13) zwischen dem zu dämpfenden Bereich (6) und dem Vakuumpaneel (11;22;25) an dem zu dämpfenden Bereich (6) befestigt ist.

3.  Vorrichtung (1) nach einem der vorhergehenden Ansprüche, bei der zumindest ein von dem mindestens einen Vakuumpaneel (11;22;25) abgedeckter zu dämpfender Bereich (6) zumindest teilweise platten- und / oder schalenähnlich aufgebaut ist.

4.  Vorrichtung (1) nach Anspruch 3, bei der das Vakuumpaneel (11;22;25) an oder nahe an einem Versteifungselement (4) angebracht ist, welches an den zu dämpfenden Bereich (6) angrenzt.

5.  Vorrichtung (1) nach einem der vorhergehenden Ansprüche, ferner aufweisend mindestens eine Unterdruckabfallsicherung (16;17) zum Halten mindestens eines der Vakuumpaneele (11;22;25) bei einem zu geringen oder fehlenden Unterdruck zwischen dem Vakuumpaneel (11;22;25) und der Vorrichtung (1).

6.  Vorrichtung (1) nach einem der vorhergehenden Ansprüche, bei der ein Hohlraum (13) zwischen dem zu dämpfenden Bereich (6) und dem mindestens einen Vakuumpaneel (11;22;25) zumindest teilweise mit mindestens einem schallabsorbierenden Material gefüllt ist.

7.  Vorrichtung (1) nach einem der vorhergehenden Ansprüche, bei der das Vakuumpaneel (22;25) mehrlagig ausgeführt ist.

8.  Vorrichtung (1) nach Anspruch 7, bei der zumindest eine Paneellage (26) ein Absorbermaterial aufweist, insbesondere einen viskoelastischen Kunststoff.

9.  Vorrichtung (1) nach Anspruch 7 oder 8, bei der zwischen mindestens zwei Paneellagen (23) ein zumindest im Regelbetrieb unterdruckbeaufschlagbarer Hohlraum (13) vorhanden ist.

10. Vorrichtung (1) nach einem der vorhergehenden Ansprüche, bei der außenseitig oder beidseitig des zu dämpfenden Bereichs (6) Vakuumpaneele (11;22;25) angeordnet sind.

11. Vorrichtung (1) nach einem der vorhergehenden Ansprüche, die als Gehäuse (1) ausgebildet ist.

12. Vorrichtung (1) nach Anspruch 11, bei der Gehäuse (1) zur Aufnahme eines Elektrogeräts ausgestaltet ist, insbesondere zur Aufnahme eines Transformators, speziell Öltransformators.

13. Verfahren zur Geräuschverringerung eines zumindest teilweise von einem vibrationsarmen Bereiche (7) umgebenen geräuschzudämpfenden Bereichs (6), **dadurch gekennzeichnet, daß** ein Vakuumpaneel (11;22;25) an dem vibrationsarmen Bereich (7) aufgesetzt und folgend durch Unterdruck so an den zu dämpfenden Bereich (6) gesaugt wird, so dass zwischen dem Vakuumpaneel (11;22;25) und dem zu dämpfendem Bereich (6) ein unterdruckbeaufschlagter Hohlraum (13) gebildet wird.

**Claims**

1.  Device (1) with at least one region (6) to be subjected to noise damping, which region is covered at least partially by at least one vacuum panel (11; 22; 25), **characterized in that** the at least one vacuum panel (11; 22; 25) is fastened on a low-vibration region (7) of the device (1).

2.  Device (1) according to Claim 1, in which the at least one vacuum panel (11; 22; 25) is fastened on the region (6) to be damped by means of at least one cavity (13), to which a negative pressure is applied, between the region (6) to be damped and the vacuum panel (11; 22; 25).

3.  Device (1) according to either of the preceding claims, in which at least one region (6) to be damped, which is covered by the at least one vacuum panel (11; 22; 25), has, at least partially, a plate-like and/or shell-like design.

4.  Device (1) according to Claim 3, in which the vacuum panel (11; 22; 25) is fitted on or close to a reinforcing element (4), which adjoins the region (6) to be damped.

5.  Device (1) according to one of the preceding claims, further having at least one negative pressure drop securing means (16; 17) for holding at least one of the vacuum panels (11; 22; 25) in the event of a negative pressure which is too low or a lack of negative pressure between the vacuum panel (11; 22; 25) and the device (1).

6. Device (1) according to one of the preceding claims, in which a cavity (13) between the region (6) to be damped and the at least one vacuum panel (11; 22; 25) is filled at least partially with at least one sound-absorbing material.

7. Device (1) according to one of the preceding claims, in which the vacuum panel (22; 25) has a multilayered design.

8. Device (1) according to Claim 7, in which at least one panel layer (26) has an absorber material, in particular a viscoelastic plastic.

9. Device (1) according to Claim 7 or 8, in which a cavity (13), to which a negative pressure can be applied at least during normal operation, is provided between at least two panel layers (23).

10. Device (1) according to one of the preceding claims, in which vacuum panels (11; 22; 25) are arranged on the outside or on both sides of the region (6) to be damped.

11. Device (1) according to one of the preceding claims, which is in the form of a housing (1).

12. Device (1) according to Claim 11, in which the housing (1) is designed to accommodate an electrical device, in particular to accommodate a transformer, specifically an oil-filled transformer.

13. Method for reducing noise in a region (6) to be subjected to noise damping, which region is at least partially surrounded by a low-vibration region (7), **characterized in that** a vacuum panel (11; 22; 25) is placed on the low-vibration region (7) and subsequently sucked against the region (6) to be damped by a negative pressure in such a way that a cavity (13), to which a negative pressure is applied, is formed between the vacuum panel (11; 22; 25) and the region (6) to be damped.

## Revendications

1. Dispositif ( 1 ) ayant au moins une partie ( 6 ) de réduction du bruit, qui est recouverte, au moins en partie, par au moins un panneau ( 11; 22; 25 ) à vide, **caractérisé en ce que** le au moins un panneau ( 11; 22; 25 ) à vide est fixé sur une partie ( 7 ) ayant peu de vibrations du dispositif ( 1 ).

2. Dispositif ( 1 ) suivant la revendication 1, dans lequel le au moins un panneau ( 11; 22; 25 ) à vide est fixé sur la partie ( 6 ) dont on doit réduire le bruit à l'aide d'au moins une cavité ( 13 ) mise en dépression entre la partie ( 6 ) dont on doit réduire le bruit et le panneau ( 11; 22; 25 ) à vide.

3. Dispositif ( 1 ) suivant l'une des revendications précédentes, dans lequel la au moins une partie ( 6 ) dont on doit réduire le bruit et qui est recouverte par le au moins un panneau ( 11; 22; 25 ) à vide est constituée, au moins en partie, comme une plaque et/ou comme une coque.

4. Dispositif ( 1 ) suivant la revendication 3, dans lequel le panneau ( 11; 22; 25 ) à vide est mis sur ou près d'un élément ( 4 ) de raidissement ( 4 ), qui est voisin de la partie ( 6 ) dont on doit réduire le bruit.

5. Dispositif ( 1 ) suivant l'une des revendications précédentes, ayant, en outre, au moins une protection ( 16; 17 ) vis-à-vis d'une diminution de la dépression pour maintenir au moins l'un des panneaux ( 11; 22; 25 ) à vide dans le cas d'une dépression trop petite ou manquante entre le panneau ( 11; 22; 25 ) à vide et le dispositif ( 1 ).

6. Dispositif ( 1 ) suivant l'une des revendications précédentes, dans lequel une cavité ( 13 ) entre la partie ( 6 ) dont on doit réduire le bruit et le au moins un panneau ( 11; 22; 25 ) à vide est remplie, au moins en partie, d'au moins un matériau absorbant le bruit.

7. Dispositif ( 1 ) suivant l'une des revendications précédentes, dans lequel le panneau ( 22; 25 ) à vide est réalisé en plusieurs couches.

8. Dispositif ( 1 ) suivant la revendication 7, dans lequel au moins une couche ( 26 ) du panneau comporte un matériau absorbant, notamment une matière plastique viscoélastique.

9. Dispositif ( 1 ) suivant la revendication 7 ou 8, dans lequel il y a, entre au moins deux couches ( 23 ) de panneau, une cavité ( 13 ) pouvant être mise en dépression, au moins en fonctionnement de régulation.

10. Dispositif ( 1 ) suivant l'une des revendications précédentes, dans lequel des panneaux ( 11; 22; 25 ) à vide sont disposés du côté extérieur ou des deux côtés de la partie ( 6 ) dont on doit réduire le bruit.

11. Dispositif ( 1 ) suivant l'une des revendications précédentes, qui est constitué en enveloppe ( 1 ).

12. Dispositif ( 1 ) suivant la revendication 11, dans lequel l'enveloppe ( 1 ) est conformée pour la réception d'un appareil électrique, notamment pour la réception d'un transformateur, en particulier d'un transformateur à huile.

13. Procédé de diminution du bruit d'une partie ( 6 ) dont on doit amortir le bruit et qui est entourée, au moins en partie, par une partie ( 7 ) ayant peu de vibrations, **caractérisé en ce qu'**on met un panneau ( 11; 22; 25 ) à vide sur la partie ( 7 ) ayant peu de vibrations et ensuite on aspire par dépression sur la partie ( 6 ) dont on doit réduire le bruit, de manière à former une cavité ( 13 ) mise en dépression entre le panneau ( 11; 22; 25 ) à vide et la partie ( 6 ) dont on doit réduire le bruit.

FIG 1A

FIG 1B

FIG 2

FIG 3

FIG 4A

FIG 4B

# FIG 5A

# FIG 5B

# FIG 6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- GB 2172966 A

### In der Beschreibung aufgeführte Nicht-Patentliteratur

- **NACH C. FILTHAUT.** Schwingungsdämpfung mittels Verbundblechen aus Stahl und Kunststoff. *Haus der Technik,* 1999

- **A. MEIER.** Die Bedeutung des Verlustfaktors bei der Bestimmung der Schalldämmung im Prüfstand. *Dissertation; Shaker,* 2000